# EUROPEAN PATENT SPECIFICATION

(11) **EP 4 103 405 B1**
(45) Date of publication and mention of the grant of the patent: **22.11.2023**
(21) Application number: 21703975.9
(22) Date of filing: 09.02.2021
(51) Int. Cl.: B29C 64/20, B29C 64/245, B29C 64/343, B29C 64/393, B33Y 30/00, B33Y 80/00, A61J 3/06

(54) **APPARATUS AND METHOD FOR 3D PRINTING**
VORRICHTUNG UND VERFAHREN ZUM 3D-DRUCKEN
APPAREIL ET PROCÉDÉ D'IMPRESSION 3D

(30) Priority: 10.02.2020 GB 202001747
(43) Date of publication of application: 21.12.2022
(73) Proprietor: FABRX LIMITED, London WC1N 1AX (GB)
(72) Inventor: BASIT, Abdul, London WC1N 1AX (GB); GOYANES, Alvaro, London WC1N 1AX (GB); GAISFORD, Simon, London WC1N 1AX (GB)
(74) Representative: Beck Greener LLP
(86) International application number: PCT/GB2021/050286
(87) International publication number: WO 2021/160999

(56) References cited:
- US-A1- 2013 053 446
- US-A1- 2017 057 730
- OKWUOSA TOCHUKWU C ET AL: "A Lower Temperature FDM 3D Printing for the Manufacture of Patient-Specific Immediate Release Tablets", PHARMACEUTICAL RESEARCH, SPRINGER NEW YORK LLC, US, vol. 33, no. 11, 9 August 2016 (2016-08-09), pages 2704-2712, XP036066126, ISSN: 0724-8741, DOI: 10.1007/S11095-016-1995-0 [retrieved on 2016-08-09]

## Description

### FIELD

The invention relates to three-dimensional (3D) printing and in particular to methods and apparatuses for 3D printing of solid-dosage-forms, including pharmaceuticals for human and/or animal consumption.

### BACKGROUND

3D printing technology has been exploited in multiple industries in recent years, both as a means to prototype new parts and as a method of manufacture of finished commercial items. It has been utilized in medical applications in areas such as manufacture of bespoke implants and experimentally as a means to create new organs by 3D printing of cell-based structures.

In addition to the potential to improve formulation characteristics, 3D printing has distinct advantages over alternative production methodologies. 3D printing allows the creation of unusual shapes, such as hollow or bi-phasic structures; and it also allow use of different materials and excipients. Perhaps most importantly, however, 3D printing offers a unique means to personalize medicines. It is envisioned that in future, drug prescribing will be dictated by personal characteristics such as age, body-weight, sex and genetics; 3D printing offers a unique means to create drug formulations to order which is not available to alternative production technologies.

However, before personalised medicine can become a reality, there are some major barriers to entry for 3D printing technology. In particular, there is a need for 3D printing apparatuses and methods which comply with regulatory, safety and quality control standards for the production of pharmaceuticals for consumption by humans and animals.

The paper by Okwuosa Tochukwu et al, entitled "A lower temperature FDM 3D printing for the manufacture of patient-specific immediate release tablets" in Pharmaceutical Research, Springer New York LLC, Vol.33, Nr.11 , pp.2704-2712, 09-08-2016 discloses a solid dosage form printing apparatus comprising a 3D printer of the so-called FDM type (extrusion-based), and a platform, wherein, after being printed, the solid dosage forms go through a series of quality control tests, among them weighing randomly selected samples.

The invention provides apparatuses and methods for overcoming the problems of the art in providing solid-dosage-form pharmaceuticals.

### SUMMARY OF THE INVENTION

In a first aspect, the invention provides a solid-dosage-form printing apparatus according to the claims.

In a second aspect, the invention provides a method of manufacturing a solid-dosage-form, as defined in the claims.

In another aspect the methods of the invention are computer-implemented methods.

In a further aspect, the invention provides a computer program comprising solid-dosage-form printing software code for performing the method according to the claims, when the computer program is run on a computer.

In a further aspect, the invention provides a computer program comprising solid-dosage-form printing software code for performing the computer-implemented method according to the preferred embodiments, when the computer program is run on a computer.

In yet another aspect the invention provides a computer-readable medium comprising the computer program according to the claims.

In yet another aspect the invention provides a computer-readable medium comprising solid-dosage-form printing software code executable to cause a computer to perform the computer-implemented method according to the preferred embodiments when the software code is executed on a computer.

In another aspect the invention provides for the use of at least one of
a. the apparatus according to the claims;
b. the computer program according to the claims; and/or
c. the computer-readable medium according to the claims;

in the preparation of a solid-dosage-form comprising an active-ingredient and an excipient; wherein said active-ingredient is selected from the group consisting of a pharmaceutical, a nutraceutical, or a food supplement.

All features described in connection with any one aspect of the invention can be used with and/or apply equally to any other aspect of the invention.

### BRIEF DESCRIPTION OF FIGURES

The invention will be further described with reference to a preferred embodiment, as shown in the drawings in which:
Fig. 1 shows front view of an apparatus according to the invention with a PMMA cover.
Fig. 2 shows left lateral view of an apparatus according to the invention without a cover.
Fig. 3 shows right lateral view of an apparatus according to the invention without a cover.
Fig. 4 shows a semi-solid extrusion print head installed in the apparatus according to the invention.
Fig. 5 shows a DPE print head installed in the apparatus according to the invention.
Fig. 6 shows a FDM print head installed in the apparatus according to the invention.
Fig. 7 shows images of HPC-SL and HPC-L printlets.
Fig. 8 shows pictures of A) suppositories Gel 44 (left) and Gel 48 (right), both medium size; B) suppositories Gel 44 printed in three different sizes.
Fig. 9 shows a photograph of a 3D printed formulation printed on a blister packing using SSE print head.
Fig. 10 shows a photograph of a 3D printer with the FDM print head and incorporated balance under the build platform.

### DETAILED DESCRIPTION

### General definitions

Throughout this application terms should be interpreted according to their standard meaning in the art unless specified otherwise. The following terms should be construed according to their standard meanings, as set out below.

As used in this specification and the appended claims, the singular forms "a", "an", and "the" include plural references unless the context clearly dictates otherwise. Thus for example, a reference to "a method" includes one or more methods, and/or steps of the type described herein and/or which will become apparent to those persons skilled in the art upon reading this disclosure and so forth.

The term "approximately" or "about" in connection with a number is intended to mean "in the region of", i.e. within normal tolerance of the stated value. In other words, a value that the skilled worker in the relevant field would round up or round down to reach the "approximate" value. For example a value in the range of 95 to 104 would be "approximately 100", or 0.96 to 1.04 would be "approximately 1".

The term "at least" when used in connection with a number has its standard meaning, i.e. means that number is the minimum value for the specified parameter/component. For example "at least one polymer" means there is one or more polymer and discloses the options of one polymer or more than one polymer being present.

The term "comprising" should be construed as meaning "including but not limited to". The term "comprising" also discloses mixtures, processes and the like "consisting essentially of" the specified features and "consisting of" the specified features. For example, a mixture disclosed herein as comprising components (a) to (d) also discloses a mixture consisting of components (a) to (d).

The term "excipient" means a pharmacologically inactive component such as a diluent, disintegrant, carrier, etc of a pharmaceutical product. The excipients that are useful in preparing a pharmaceutical composition are generally safe, non-toxic and are acceptable for veterinary as well as human pharmaceutical use. Reference to an excipient includes both one and more than one such excipient.

The term "greater than" when used in connection with a number has its standard meaning, i.e. means that the specified parameter has a value higher than the specified number.

The term "not greater than" or "no more than" when used in connection with a number has its standard meaning, i.e. means that the specified parameter has a maximum value equal to the specified number.

The term "in the range from X to Y" has its standard meaning, i.e. the value of the parameter is a minimum of X and a maximum of Y.

The term "less than" when used in connection with a number has its standard meaning, i.e. means that the specified parameter has a value lower than the specified number.

The term "multiple" has its standard meaning, i.e. at least 2, more preferably at least 3.

The term "no less than" or "not less than" when used in connection with a number has its standard meaning, i.e. means that the specified parameter has a minimum value equal to the specified number.

The term "optionally" has its standard meaning, i.e. means that the specified feature is not essential and may or may not be present. Optional components or process steps disclose the claimed product or process including and not including the optional feature.

The term "performed using" as for example in "3D printing is performed using" has its standard meaning, i.e. when the claimed process is carried out, the specified feature applies.

The term "pharmaceutical grade" has its standard meaning of being suitable for use in pharmaceutical products. For example, the product may be in excess of 80% purity, preferably 90% purity, more preferably 95% purity, even more preferably 99% purity. Optionally "pharmaceutical grade products" may be products that are more than 99% pure and without binders, fillers, excipients, dyes, or unknown substances.

The term "solid" throughout this application is used to refer to the state of matter, i.e. to distinguish from liquids and gels.

The term "weight %" or "percent by weight" has its standard meaning throughout this application, i.e. percentage by weight based on the total weight of the relevant mixture. In other words the total weight of the mixture is 100%.

Features which are described herein with reference only to a single aspect or embodiment of the invention apply equally to all other aspects and embodiments of the invention. Hence features from one aspect or embodiment may be combined with features from another aspect or embodiment. For example, the disclosed active-ingredients and excipients may be combined in any way with each other and with the disclosed features of the apparatus and methods disclosed.

### Solid-dosage-forms

In one aspect the invention provides a solid-dosage-form printing apparatus, which is an apparatus for printing solid-dosage-forms. Solid-dosage-forms as provided by the methods and apparatus of the invention are administrable to humans and comprise at least one active-ingredient and at least one excipient. Solid-dosage-forms as provided herein are for consumption by humans and/or animals.

Examples of solid-dosage-forms include tablets, printlets, caplets, capsules, granules, polypills, polyprintlets, mini-tablets, orally-disintegrating tablets, films, suppositories, pessaries, drug-loaded implantable devices, gastroretentive devices and the like.

In a preferred embodiment, applicable to all aspects, the solid-dosage-forms are selected from the group consisting of tablets, printlets, caplets, capsules, granules, polypills, polyprintlets, mini-tablets, orally-disintegrating tablets, films, suppositories, pessaries, drug-loaded implantable devices, and gastroretentive devices. More preferably selected from the group consisting of tablets, printlets, caplets, capsules, granules, polypills, polyprintlets, mini-tablets, orally-disintegrating tablets, films, suppositories, and pessaries.

### Component Materials

For all aspects and embodiments of the invention the component materials used are pharmaceutical-grade, in order to provide end products which are suitable for the administration of active-ingredients.

The active-ingredients and excipient materials suitable for use in the aspects and embodiments of the invention are described hereinafter individually. The skilled worker will readily understand that each component can be combined with the other components described and such combinations are applicable to all aspects and embodiments of the invention.

### Active-ingredients

Active-ingredients suitable for use with the apparatus and methods of the invention are not particularly limited, insofar as these are administrable to humans and/or animals by any administration route. Active-ingredients are selected from the group consisting of pharmaceuticals, nutraceuticals and food supplements.

In all aspects and embodiments it is preferred that the active-ingredients are pharmaceuticals (also referred to as drugs). Pharmacologically acceptable derivatives and/or salts of the drugs may also be used or contained in the solid-dosage-forms provided by the apparatus and methods of the invention.

Dosage of the active-ingredient will vary depending on the condition to be treated and the subject. The skilled person can readily select the appropriate dosage to be used, or if preparing according to a prescription, this will have been set out be appropriately trained and qualified medical staff.

### Excipients

In the context of this invention the term "excipient" has its standard meaning in the art, i.e. a substance formulated alongside the active-ingredient of a solid-dosage-form, included for the purpose of long-term stabilization, bulking up solid formulations that contain potent active-ingredients, or to confer a therapeutic enhancement on the active-ingredient in the final dosage form, such as facilitating drug absorption, reducing viscosity, or enhancing solubility. Excipients are pharmacologically inactive components such as a diluent, disintegrant, carrier, etc of a pharmaceutical product. The excipients that are useful in preparing a pharmaceutical composition are generally safe, non-toxic and are acceptable for veterinary as well as human pharmaceutical use.

In addition to transporting the active-ingredient to the site in the body where it is intended to exert its action, excipients play an important part in the manufacturing process. They may also be important for keeping the active-ingredient from being released too early in the assimilation process in places where it could damage tender tissue and create gastric irritation or stomach upset.

Other excipients help the active-ingredient to disintegrate into particles small enough to reach the blood stream more quickly and still others protect the product's stability so it will be at maximum effectiveness at time of use. In addition, some excipients are used to aid the identification of a drug product.

Last, but not least, some excipients are used simply to make the product taste and look better. This improves patient compliance, especially in children. Although technically "inactive" from a therapeutic sense, pharmaceutical excipients are critical and essential components of a modern dosage product. In many products, excipients make up the bulk of the total dosage form.

Suitable excipients include diluents or fillers, binders, disintegrants, colouring agents, preservatives, plasticizers, and lubricants.

Without being bound by theory, it is believed to be the excipient or combination of excipients which have the greatest impact upon release of the active-ingredient, for example in the digestive system, by means of its dissolution properties e.g. under the conditions found in the stomach and intestine.

Selection of the excipient(s) is therefore influenced by the active-ingredient used and the release-behaviour desired in the end-product solid-dosage-formulations.

The skilled person is able to select the appropriate excipients using their skill in the art. Further discussion of drugs and excipients in the 3D printing of pharmaceuticals is provided in International (PCT) Patent Application Number PCT/GB2017/053558 published as WO2018/096363.

### Apparatus

The solid-dosage-form printing apparatus according to the invention provides solid-dosage-forms comprising active-ingredients, administrable by any route and for human and/or animal consumption, and must therefore comply with the rules and laws for preparing and providing medicinal products for human and animal use, for example, with respect to safety and quality control.

3D printers that are available for use in current additive manufacturing processes are not suitable for use in preparing solid-dosage-forms as defined and discussed herein. Some of the problems with such printers include that they are made of or incorporate e.g. plastic, paints, metals or other leachable component parts which can contaminate the products. This is a major problem and prevents standard 3D printers being used in the manufacture of solid-dosage-forms. Further problems include that 3D printers known in the art are not configured for access and cleaning to the standard required when making solid-dosage-forms as defined herein. Standard printers are often open and exposed to the environment, which makes them susceptible to dust and the contamination of the printing environment making them unsuitable for printing medicines. The transference of the movement of the motor to the different parts of the printer is normally through straps that need lubrication that can cause contamination. Standard printers normally have a mobile build platform that make them unsuitable for incorporation of quality control systems like balances and spectroscopic equipment. These printers do not allow printing onto blister packing since the build platform is not adapted for that.

For example with a FDM print head, many of the standard printers have the drive at the back of the printer far from the tip of the nozzle: this makes printing with drug-loaded filaments technically very challenging.

Preferably, the configuration of the apparatus according to the invention permits effective cleaning and maintenance in order to avoid cross-contamination, build-up of dust or dirt, and in general avoid adverse effects on the quality of the product.

The 3D printer incorporated in the apparatus according to the invention must be suitable for printing solid-dosage-forms including active-ingredients, which are administrable and fit for human and/or animal consumption.

Hence the 3D printer incorporated in the apparatus according to the invention may be described as being free of components made of plastic or leachable materials and/or may be described as being configured to permit ease of access and cleaning to the standard required when manufacturing or providing solid-dosage-forms for human and/or animal consumption.

In a preferred embodiment the 3D printer incorporated in the apparatus may be made of pharmaceutical grade stainless steel (304 or 316L), Teflon, or anodized aluminium in the component parts which in use are in contact with the printing mixture/filament prior to printing.

Equally preferably the paint used on the 3D printer incorporated in the apparatus may be based on polyethylene and approved for pharmaceutical used and the non-metallic parts may be made of polyamide. To avoid external contamination the printer preferably has a cover which may be made of e.g. poly(methyl methacrylate) preferably including a UV filter, to avoid degradation of light-sensitive materials. The printer may use printer spindles for movement of the movable parts, that do not need lubricant, and the build platform does not move while printing, which allows the use of quality control systems like balances and spectroscopic technologies.

In a preferred embodiment, applicable to all aspects of the invention, the 3D printer incorporated in the apparatus may include one or more of the following features, and in the most preferred embodiment may include all of the following features:
- made of pharmaceutical grade stainless steel (304 or 316L), Teflon, or anodized aluminium, in the component parts which in use are in contact with the printing mixture/filament prior to printing;
- non-metallic parts made of polyamide or Teflon;
- any paint used may be polyethylene-based and approved for pharmaceutical use;
- comprises a cover including a UV filter;
- comprises printer spindles for movement of mobile parts, said printer spindles operable without lubricant.

In addition it is further preferred that the build platform of the apparatus is static, i.e. non-mobile.

### Interchangeable Print heads

The 3D printer incorporated in the apparatus according to the invention includes an interchangeable print head selected from the group consisting of a fused deposition modelling (FDM) print head, a semi-solid extrusion (SSE) print head and a direct powder extrusion (DPE) print head. Print heads are also known as printer heads or printer extruders.

Preferably the 3D printer includes an SSE print head or a DPE print head.

Typically the interchangeable print heads are manually interchanged, for example by manually disconnecting one print head and manually connecting another. In an embodiment the interchanging of print heads may be automated and/or computer-controlled.

The 3D printer may comprise more than one of the interchangeable print heads, for example any two or all three of the interchangeable print heads. In a preferred embodiment the 3D printer may comprise an interchangeable SSE print head and an interchangeable DPE print head.

The apparatus according to the invention may include one, two or all three interchangeable print heads. It is preferred that all three print heads are included in the apparatus. It is preferred that the interchanging of print-heads is automated.

### FDM Print head

The principle underpinning FDM technology is the deposition of thin strands of melted polymer from a filament, creating layers until the desired object is printed. With an FDM print head, a printing filament is used which comprises at least an active-ingredient and an excipient as previously discussed. The preparation of suitable filaments for use in the apparatus according to the invention is within the knowledge and ability of the skilled person. The standard process involves the hot melt extrusion of the drug and excipients to obtain a filament at determined pressure and temperature

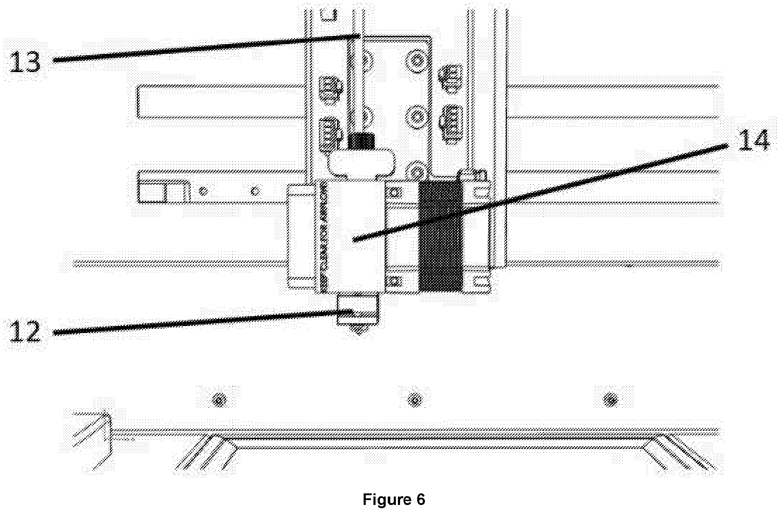

An apparatus including a typical fused deposition modelling (FDM) print head is shown in figure 6.

Suitable FDM print heads are available commercially and include E3D, DisTech Automation Prometheus, Micro Swiss. All of these use a direct drive to push filament through the nozzle.

### SSE Print head

Semi-solid extrusion printing converts semi-solid material into a solid-dosage-form.

The semi-solid extrusion (SSE) print head preferably used in the apparatus of the invention incorporates a syringe that is loaded with the printing mixture.

With an SSE print head, a printing mixture is used which comprises at least an active-ingredient and an excipient as previously discussed. The preparation of suitable printing mixtures for use in the apparatus according to the invention is within the knowledge and ability of the skilled person.

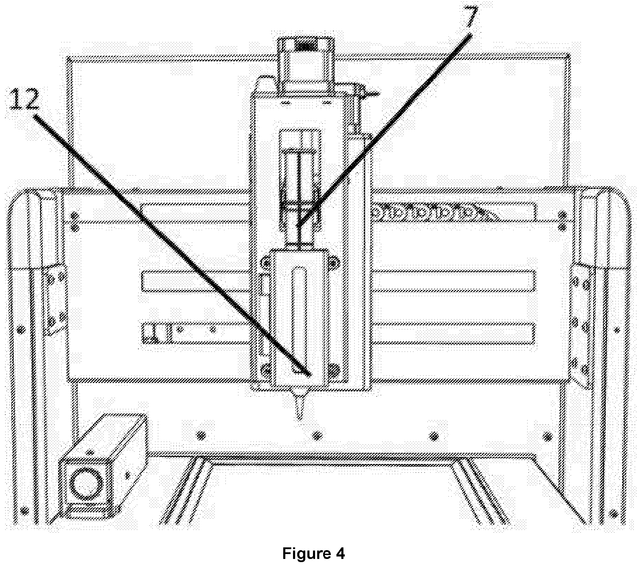

The mixture is loaded in a syringe preferably with non-silicon, non-lubricant plunger and with a luer lock system to attach a tip with different diameter. The syringe is inserted in the print head for SSE from the front of the print head to provide easy access and facilitating an easy exchange of the syringes. Figure 4 shows an SSE print head. Preferably the SSE print head incorporates a heating element that increases the temperature of the mixture to make it more fluid, in other words, to lower the viscosity of the printing mixture and facilitate extrusion. Preferable extrusion temperatures may be in the range from 30°C to 95°C. It is preferred that the sections of the print head that are in contact with the syringe are made of materials approved for production of medicines such as stainless steel or anodized aluminium.

### DPE Print head

### The direct powder extrusion (DPE) print head

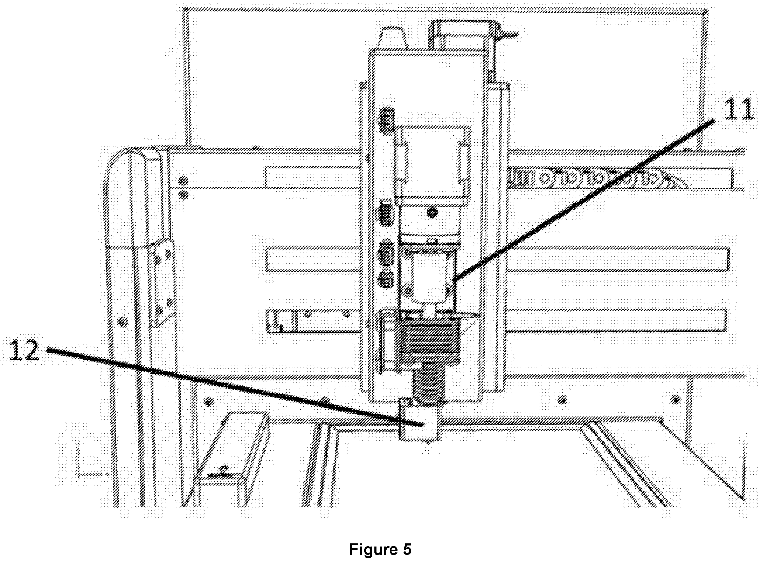

A preferred DPE print head is shown in figure 5. This includes means for hot melt extrusion of the printing mixture.

With a DPE print head, a printing mixture is used which comprises at least an active-ingredient and an excipient as previously discussed. The preparation of suitable printing mixtures for use in the apparatus according to the invention is within the knowledge and ability of the skilled person. The printing mixture can also include pre-prepared small particles or pellets with or without drug loaded.

The parts of the DPE print head in contact with the mixture are preferably made of materials approved for preparation of medicines such as stainless steel or anodized aluminium. The print head is easy to dismount and can be washed with water and normal cleaning products. Use of a DPE print head in the apparatus provides for the extrusion of small amounts of materials, even around 1 gram. This makes it particularly suitable when there is a limited amount of drug, for example in pre-clinical and clinical trials. Printing of higher amounts and continuous production of medicines is also possible with the apparatus incorporating the DPE print head.

### Build platform

The apparatus further comprises a build platform. The build platform may be integrated into the 3D printer or may be separate from the 3D printer.

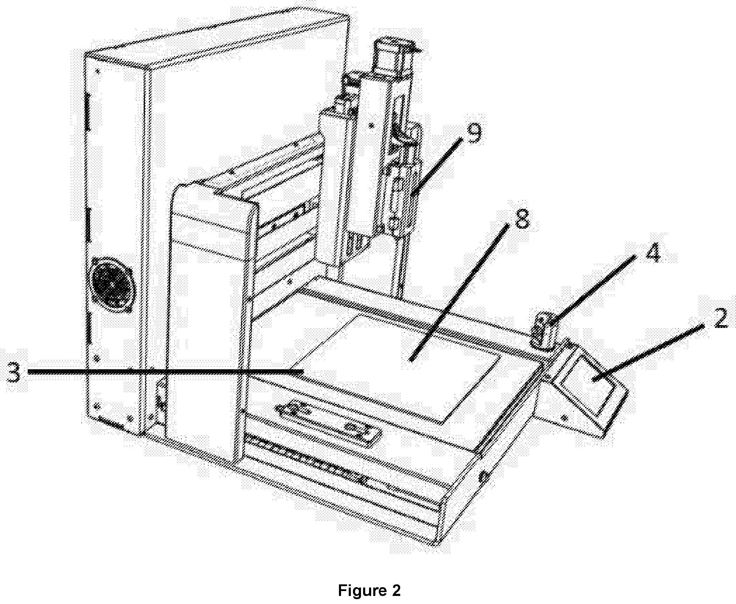

The build platform is typically static, i.e. is non-mobile, such that it remains steady during the printing process. The build platform can be the top part of a balance as shown in figure 2.

When in use with an SSE or DPE print head, the apparatus according to the invention preferably further comprises a printing base. The solid-dosage-forms are printed onto the printing base. Suitable printing bases may be, for example, a sheet made of a non-stick material. Preferred printing bases comprise or consist of blister packing and bases made of polyether ether ketone (PEEK) or baking paper.

Typically, when the apparatus is in use, the printing base is located upon the build platform.

In a preferred embodiment, the build platform may comprise means for securing a printing base appropriate for the print head being used. This is most preferred where the apparatus comprises an SSE or DPE print head. For example, clips, sticker or magnets that can hold in place a sheet of baking paper or blister packing for use with SSE.

### Balance

The apparatus further comprises a balance for measuring the mass of the printed solid-dosage-forms. The balance may comprise a balance pan on which the solid-dosage-forms to be weighed may be directly printed. The balance can determine the weight of the formulations being printed in line and after the finalization of each individual solid-dosage-form. The recorded values are stored in the software for quality control and traceability purposes. The balance may be controlled with the same software as the 3D printer. The balance may be connected to a computer or connected directly to the control board of the 3D printer. The balance has a balance pan that is big enough to hold a printing base, if one is used, such as blister packing. The balance preferably has capacity to weight up to 30 solid-dosage-forms at the same time. Preferably the balance pan will have dimensions of at least 18 × 16 cm, and a balance sensitivity of at least 10 mg.

It is most preferred in all aspects and embodiments that the balance pan be integrated into the build platform. For example, the build platform may comprise or consist essentially of the balance pan.

### Means for performing in-line Spectroscopy

The apparatus optionally further comprises means for performing in-line near-infra-red (NIR) and/or Raman spectroscopy on the solid-dosage-form product.

It is preferred in all aspects and embodiments that the apparatus according to the invention includes such means for performing in-line NIR and/or Raman spectroscopy of each individual solid-dosage form produced.

NIR and/or Raman spectroscopy performed on the solid-dosage-forms in-line provides verification of the dosage of active-ingredient and quality control for the solid-dosage-forms while printing or at the end of the printing process. NIR and Raman provide verification of the dosage and the compositions.

The means for performing in-line NIR and/or Raman spectroscopy may also be referred to as a spectroscopic analytical system. Such a system typically comprises a source of light and a detector.

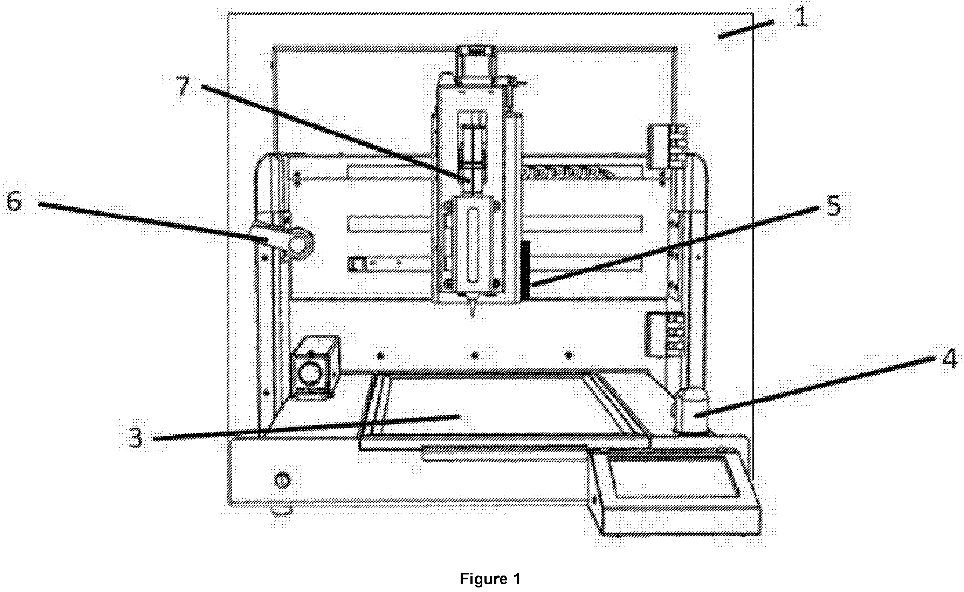

The spectroscopic analytical system may be integrated into the 3D printer, for example close to the print head (see figure 1) or in one side of the build platform, as shown in figure 2. The spectroscopic system can be mobile and if placed close to the print head would be controlled by the movement of the print head. Both Raman and NIR systems can be handheld systems (portable) or conventional systems that are connectable to the 3D printer using e.g. a fiber optic probe.

The system is designed to work in reflectance mode for embodiments where the balance pan is integrated into the build platform. In reflectance mode results are obtained from the light that is reflected from the formulations. The equipment can also work in transmission mode if the balance pan is not integrated into the build platform, and in that case the light from the source of light will pass through the formulations until it reaches a detector placed under the build plate.

The spectroscopic system may operably be connected to a computer and directly controlled by the software of the printer in order to analyse the samples *in situ* during printing. An example of a suitable means for performing near-infra-red spectroscopy would be the Bruker MPA II system working in reflection mode with an optical probe.

### Quality Control

Preferably, the apparatus according to the invention further comprises a camera and/or scanner which can scan QR and datamatrix codes (or other 2D codes). Such a camera or scanner may provide additional quality control in production of solid-dosage-forms.

Preferably the camera may be at least 8 megapixel resolution such as an ultra-wide-angle chip camera with a Nikon lens, in order to cover the whole build platform and the print head.

### The scanner is an optical scanner.

The camera or optical scanner has the function of scanning datamatrix or QR code (or other 2D codes) that identify the raw material and packing material in order to provide a full traceability of the materials and medicines to the patient.

If a camera is used this can also have a second function, acting as a quality control method detecting if there are any printing errors during the printing process, for example if a layer of a formulation is not printed. Such errors can be detected by the balance, but the camera adds extra security, recording the whole process to check for any errors and keep records of the production of each solid-dosage-form.

A camera can be used which records the printing process and can also scan datamatrix or QR codes (or other 2D codes). Alternatively, a camera can be used which records the printing process, in combination with an optical scanner which can scan datamatrix or QR code (or other 2D codes). It is also possible to use only a scanner which can scan datamatrix or QR codes (or other 2D codes). The most preferred embodiments, applicable to all aspects of the invention, either use a camera that can fulfil both functions, or use a camera and optical scanner in combination.

Preferably said camera and/or scanner may be used in combination with an SSE Print head and be operable to scan a datamatrix or QR code (or other 2D codes) located on the syringe loaded with the printing mixture. In the corresponding computer-implemented methods of the invention the method may be configured to require such a scanning step prior to printing with the SSE Print head.

### Additional components

The apparatus according to the invention may further comprise a computer with suitable data connections to the apparatus, which is configured to control and/or operate the apparatus.

The apparatus may further comprise an access-control system, including a fingerprint reader and a RFID (radio frequency identification) reader (that can be used if the user is wearing gloves). Such an access control system may be used to ensure that the use of the printer is restricted to authorized users.

### Methods

The invention further provides a method of manufacturing or providing a solid-dosage-form comprising:
i) providing an apparatus according to the invention;
ii) operating the 3D printer to print the solid-dosage-form upon the build platform;
iii) operating the balance and/or operating the in-line spectroscopy to verify the dosage of the active-ingredient within the solid-dosage-form;
iv) optionally performing one or more further processing steps.

Preferably the method comprises operating the in-line spectroscopy and this comprises at least one of near-infra-red spectroscopy and raman spectroscopy. More preferably the method comprises operating both near-infra-red and raman spectroscopy. Most preferably the method comprises operating the balance and operating both near-infra-red and raman spectroscopy.

The method may further comprise the steps of:
operating a computer, with suitable data connections to the printing apparatus, to run solid-dosage-form printing software to:
   i) obtain information regarding one or more parameters pertaining to the solid-dosage-form to be printed;
   ii) calculate the mass and/or volume of the solid-dosage-form to be printed based on the information obtained in step (i);
   iii) control printing of and relative proportions of ingredients within the solid-dosage-form by, on the basis of the information obtained in step (i) and calculations performed in step (ii):
      a. controlling printing, deposition and/or extrusion, of an active-ingredient-containing printing mixture or filament
      b. optionally controlling performance of one or more further processing steps;
wherein the active-ingredient-containing printing mixture or filament consists of, consists essentially of, or comprises, an active-ingredient-containing composition comprising an active-ingredient and an excipient; wherein said active-ingredient is selected from the group consisting of a pharmaceutical, a nutraceutical, or a food supplement.

The method of manufacturing or providing a solid-dosage-form according to the invention may be a computer-implemented method comprising operating a computer, with suitable data connections to the printing apparatus, to run solid-dosage-form printing software to:
i) obtain information regarding one or more parameters pertaining to the solid-dosage-form to be printed;
ii) calculate the mass and/or volume of the solid-dosage-form to be printed based on the information obtained in step (i);
iii) control printing of and relative proportions of ingredients within the solid-dosage-form by, on the basis of the information obtained in step (i) and calculations performed in step (ii):
   a. controlling printing, deposition and/or extrusion, of an active-ingredient-containing printing mixture or filament
   b. optionally controlling performance of one or more further processing steps;
wherein the active-ingredient-containing printing mixture or filament consists of, consists essentially of, or comprises, an active-ingredient-containing composition comprising an active-ingredient and an excipient; wherein said active-ingredient is selected from the group consisting of a pharmaceutical, a nutraceutical, or a food supplement.

### Computer Program

The invention further provides a computer program comprising solid-dosage-form printing software code for performing the method of the invention, when the computer program is run on a computer.

The easy to use computer program allows for the use of the printer by people without wide knowledge of 3D printing. The program provides for the printing of medicines by selecting the number of tablets to be printed and the dose. The program based on preloaded information prepares the instructions to be sent to the apparatus, including the quality control system (balance, spectroscopic system and camera).

### Computer-readable Medium

The invention further provides a computer-readable medium comprising the computer program of the invention.

The invention further provides a computer-readable medium comprising solid-dosage-form printing software code executable to cause a computer to perform the computer-implemented method of the invention when the software code is executed on a computer.

Examples of typical computer-readable media include CD-ROM and USB Drive.

### Uses

Further provided is the use of at least one of
a. the apparatus according to the invention;
b. the computer program according to the invention; and/or
c. the computer-readable medium according to the invention;

in the preparation of a solid-dosage-form comprising an active-ingredient and an excipient, wherein said active-ingredient is selected from the group consisting of a pharmaceutical, a nutraceutical, or a food supplement.

Whilst the invention has been described with reference to a preferred embodiment, it will be appreciated that various modifications are possible within the scope of the invention.

All prior teachings acknowledged above are hereby incorporated by reference. No acknowledgement of any prior published document herein should be taken to be an admission or representation that the teaching thereof was common general knowledge in the United Kingdom or elsewhere at the date hereof.

### DETAILED DESCRIPTION OF FIGURES

Fig. 1 shows front view of an apparatus according to the invention with a PMMA cover (1). Depicted is an SSE print head (9) with syringe (7) and with spectroscopic analysis system (5) integrated and mobile with the print head (9). An integrated build platform comprising balance pan (3) is shown. The apparatus shown includes a camera (4) which can scan for datamatrix or QR code (or other 2D codes) and record the printing process for quality control. A touchscreen control (2) is also shown.

Fig. 2 shows left lateral view of an apparatus according to the invention without a cover (1). Again an SSE print head (9) is depicted with syringe (7). The camera (4) and screen (2) are shown in the apparatus. The balance (8) is incorporated into the build platform (3) in this embodiment. In-built spectroscopic analysis system is visible to the side of the build platform.

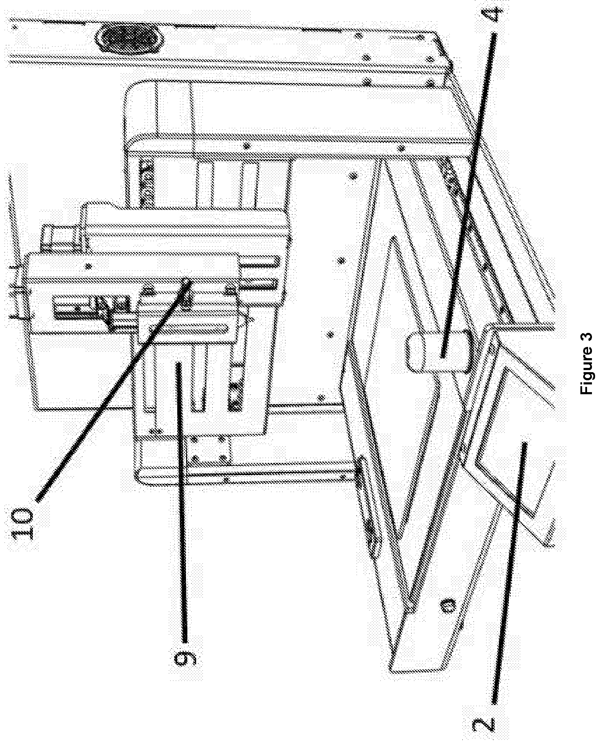

Fig. 3 shows right lateral view of an apparatus according to the invention without a cover, the opposite side of Fig. 2.

Fig. 4 shows a semi-solid extrusion print head installed in the apparatus according to the invention.

Fig. 5 shows a DPE print head installed in the apparatus according to the invention. The DPE print head depicted includes a heating element (12) and a feeder (11).

Fig. 6 shows a FDM print head installed in the apparatus according to the invention. The FDM print head shown includes a heating element (12), filament (13) and direct drive (14). The drive (14), heater (12) and filament (13) are close to the extruder nozzle.

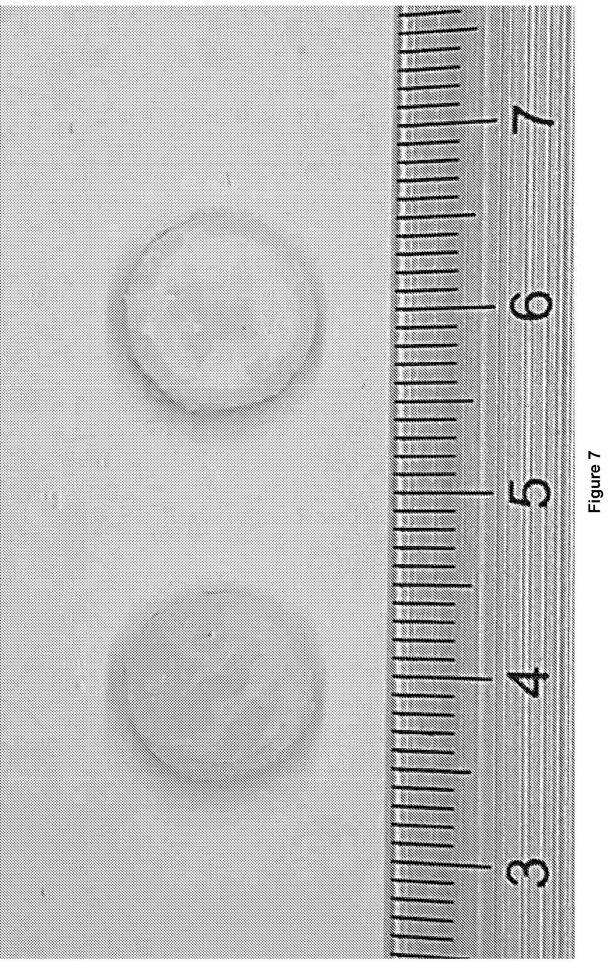

Fig. 7 shows images of HPC-SL and HPC-L printlets produced according to example 1.

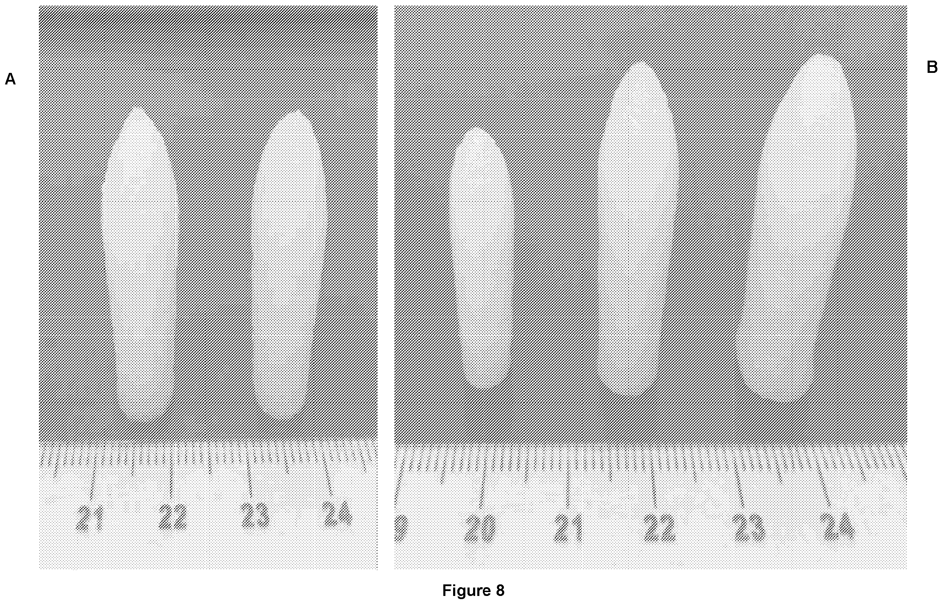

Fig 8 shows pictures of A) suppositories Gel 44 (left) and Gel 48 (right), both medium size; B) suppositories Gel 44 printed in three different sizes, according to example 2.

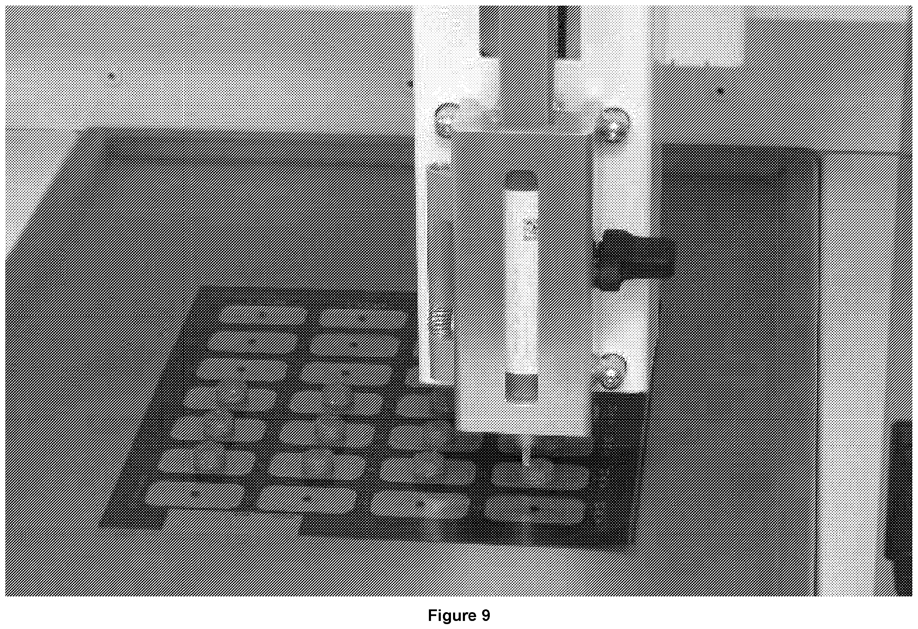

Fig 9 shows a photograph of a 3D printed formulation printed on a blister packing using SSE print head, as described in example 3.

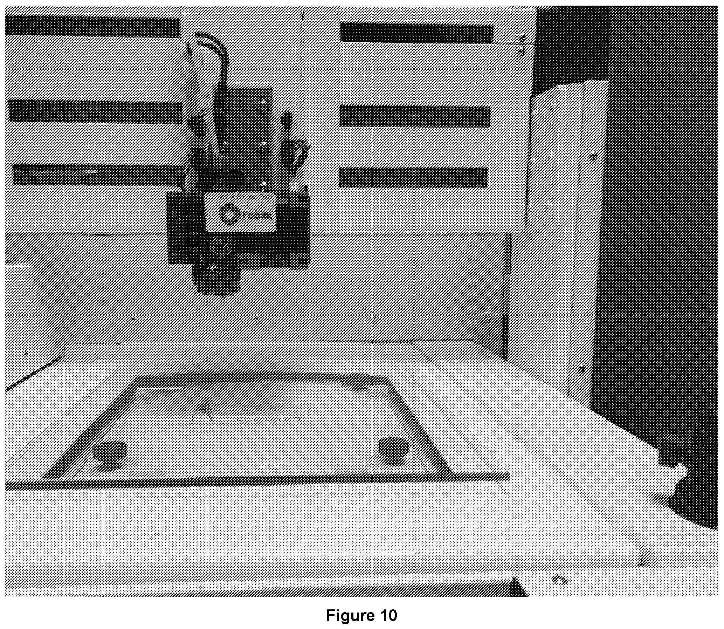

Fig 10 shows a photograph of a 3D printer with the FDM print head and incorporated balance under the build platform.

### List of elements shown in figures:

1 3D Printer Cover
2 Interface/Control Screen
3 Build platform
4 Camera
5 Spectroscopic sensor
6 Door handle
7 Syringe
8 Balance
9 SSE print head
10 Handle for syringe compartment
11 Feeder
12 Heating element
13 Filament
14 Direct drive

### EXAMPLES

### Example 1: Use of the DPE print head to print oral solid-dosage-forms of tramadol

A 10 g blend of drug and excipients was prepared. Matrix polymers, plasticisers and lubricant were mixed in a mortar and pestle with the drug to obtain a homogenous mixture. The compositions of the formulations evaluated in this study are listed in Table 1. The prepared mixture was then added to the hopper of a pharmaceutical 3D printer with a direct powder extruder print head as discussed above. The selected 3D geometry was a cylindrical printlet (10 mm diameter × 3.6 mm height). The printer settings were as follows: Feed 2100 steps/mm, infill 100%, high resolution with brim, without raft and an extrusion temperature of 170 °C, speed while extruding (20 mm/s), speed while travelling (90 mm/s), number of shells (2) and layer height (0.20 mm). Some of the printlets produced are shown in Figure 7.

**Table 1. Compositions of all the formulations investigated in this study.**

| **Formulation** | **HPC-SL (%w/w)** | **HPC-L (%w/w)** | **PEO (%w/w)** | **Mannitol (%w/w)** | **Printing Temperature (°C)** |
|---|---|---|---|---|---|
| HPC-SL | 50% | - | - | 40% | 170 |
| HPC-SL/PEO | 60% | - | 20% | 10% | 170 |
| HPC-L | - | 50% | - | 40% | 170 |
| HPC-L/PEO | - | 60% | 20% | 10% | 170 |

| | | | | | |
|---|---|---|---|---|---|
| Note: All formulations included 5% tramadol and 5% magnesium stearate. | | | | | |

### Example 2: Use of the SSE print head to print suppositories

Pre-selected ratios of lipid excipients and drug (Table 2) were mixed in a glass beaker and placed on a heating plate. The mixtures were heated up to the melting point of each

mixture (42 °C for Gel 44 and 48 °C for Gel 48) under magnetic stirring until the complete solubilization of the drug in the lipid excipients. The masses were immediately transferred to a 20 mL extrusion syringe with a tapered extrusion tip (0.58 mm orifice) and allowed to solidify at room temperature. Then, the syringe was placed into the pharmaceutical 3D printer with the semisolid extrusion print head. Suppositories were designed as follows: 0.5mm layer height; 2.4mm shell thickness; 25 mm/s flow speed; 1.2 mm nozzle size. Finally, 3D printed suppositories were allowed to solidify at room temperature and subsequently stored in refrigeration at 4 °C. Some of the suppositories produced are shown in Figure 8.

**Table 2. Formulation composition and printing temperature.**

| Formulation | Gelucire 44/14 (% w/w) | Gelucire 48/16 (% w/w) | Coconut oil (% w/w) | Tacrolimus (%w/w) | Printing temperature (°C) |
|---|---|---|---|---|---|
| Gel 44 | 79.94 | 0 | 19.94 | 0.12 | 42 |
| Gel 48 | 0 | 79.94 | 19.94 | 0.12 | 48 |

### Example 3: Use of the SSE print head to print chewable tablets

Pre-selected ratio of a polysaccharide excipient, sugar, flavour agent, colorant and drug were mixed in a beaker with water and placed on a heating plate under stirring. The mass was immediately transferred to a 20 mL extrusion syringe with a tapered extrusion tip (0.58 mm orifice) and allowed to solidify at room temperature. Then, the syringe was placed into the pharmaceutical 3D printer with the semisolid extrusion print head. The selected 3D geometry was a cylindrical printlet (10 mm diameter × 3.6 mm height). The formulations were printed on a blister packing, as shown, for example, in Figure 9.

## Claims

1. A solid-dosage-form printing apparatus comprising:
i) a 3D printer suitable for printing solid-dosage-forms, said 3D printer comprising an interchangeable print head (9) selected from the group consisting of: a fused deposition modelling (FDM) print head, a semi-solid extrusion (SSE) print head and a direct powder extrusion (DPE) print head;
ii) a build platform (3)
iii) a balance (8) for measuring the mass of the printed solid-dosage-forms, said balance being integrated into said build platform; and optionally
iv) means for performing in-line near-infra-red and/or raman spectroscopy on the solid-dosage-form;
wherein said solid-dosage-form comprises at least one active-ingredient and at least one excipient.

2. The apparatus as claimed in claim 1, comprising said means for performing in-line near-infra-red and/or raman spectroscopy on the solid-dosage-form, preferably comprising means for performing both near-infra-red and raman spectroscopy.

3. The apparatus as claimed in any preceding claim further comprising a camera for recording said printing of solid-dosage-forms and/or for scanning a datamatrix or QR code (or other 2D codes); and/or a scanner for scanning a datamatrix or QR code (or other 2D codes).

4. The apparatus as claimed in any preceding claim wherein said 3D printer comprises one or both of an SSE and DPE print head.

5. The apparatus as claimed in any preceding claim wherein said build platform comprises or consists essentially of the balance pan of said balance.

6. The apparatus as claimed in any preceding claim further comprising a printing base, preferably comprising blister packing, polyether ether ketone (PEEK) or baking paper.

7. The apparatus as claimed in any preceding claim further comprising means for securing a printing base.

8. A method of manufacturing a solid-dosage-form comprising:
i) providing an apparatus as claimed in any preceding claim;
ii) operating the 3D printer to print the solid-dosage-form upon the build platform;
iii) operating the balance and/or operating the in-line spectroscopy to verify the dosage of the active-ingredient within the solid-dosage-form;
and optionally performing one or more further processing steps.

9. The method according to claim 8, wherein said 3D printer comprises an SSE print head, said method further comprising:
iv) scanning a datamatrix or QR code (or other 2D codes) located on a syringe loaded with a printing mixture in the SSE print head.

10. The method according to claim 8 or claim 9, said method further comprising recording the printing of said solid-dosage-form upon the build platform.

11. The method as claimed in any of claims 8 to 10, further comprising:
operating a computer, with suitable data connections to the printing apparatus and configured to control and/or operate the apparatus, to run solid-dosage-form printing software to:
i) obtain information regarding one or more parameters pertaining to the solid-dosage-form to be printed;
ii) calculate the mass and/or volume of the solid-dosage-form to be printed based on the information obtained in step (i);
iii) control printing of and relative proportions of ingredients within the solid-dosage-form by, on the basis of the information obtained in step (i) and calculations performed in step (ii):
a. controlling printing, deposition and/or extrusion, of an active-ingredient-containing printing mixture or filament
b. optionally controlling performance of one or more further processing steps;
wherein the active-ingredient-containing printing mixture or filament consists of, consists essentially of, or comprises, an active-ingredient-containing composition comprising an active-ingredient and an excipient;
wherein said active-ingredient is selected from the group consisting of a pharmaceutical, a nutraceutical, or a food supplement.

12. The method according to claim 11 wherein the method is configured to require scanning of a datamatrix or QR code (or other 2D codes) prior to printing with an SSE Print head

13. A computer program comprising solid-dosage-form printing software code for performing the method as claimed in claim 11 or claim 12 when the computer program is run on a computer as defined in claim 11.

14. A computer-readable medium comprising the computer program of claim 13.

15. Use of at least one of
a. the apparatus as claimed in any of claims 1-7;
b. the computer program of claim 13; and/or
c. the computer-readable medium of claim 14;
in the preparation of a solid-dosage-form comprising an active-ingredient and an excipient;
wherein said active-ingredient is selected from the group consisting of a pharmaceutical, a nutraceutical, or a food supplement.

## Patentansprüche

1. Feststoff-Dosierungsformdruckgerät, umfassend:
(i) einen 3D-Drucker, der zum Drucken von Feststoff-Dosierungsformen geeignet ist, wobei der 3D-Drucker einen austauschbaren Druckkopf (9) umfasst, der aus der Gruppe ausgewählt ist, die aus Folgendem besteht: einem Fused-Deposition-Modeling-Druckkopf (FDM-Druckkopf), einem Semi-Solid-Extrusion-Druckkopf (SSE) und einem Direct-Powder-Extrusion-Druckkopf (DPE-Druckkopf);
(ii) eine Aufbauplattform (3)
(iii) eine Waage (8) zum Messen der Masse der gedruckten Feststoff-Dosierungsformen, wobei die Waage in die Aufbauplattform integriert ist;
und optional
(iv) Mittel zum Durchführen von Inline-Nah-Infrarot- und/oder Ramanspektroskopie an der Feststoff-Dosierungsform;
wobei die Feststoff-Dosierungsform mindestens einen Wirkstoff und mindestens einen Hilfsstoff umfasst.

2. Gerät nach Anspruch 1, das die Mittel zum Durchführen von Inline-Nah-Infrarotspektroskopie und/oder Ramanspektroskopie an der Feststoff-Dosierungsform umfasst, die bevorzugt Mittel zum Durchführen von Nah-Infrarotspektroskopie und Ramanspektroskopie umfasst.

3. Gerät nach einem vorstehenden Anspruch, das ferner eine Kamera zum Aufzeichnen des Druckens von Feststoff-Dosierungsformen und/oder zum Scannen einer Datenmatrix oder eines QR-Codes (oder anderer 2D-Codes); und/oder einen Scanner zum Scannen einer Datenmatrix oder eines QR-Codes (oder anderer 2D-Codes) umfasst.

4. Gerät nach einem vorstehenden Anspruch, wobei der 3D-Drucker einen SSE- und/oder einen DPE-Druckkopf umfasst.

5. Gerät nach einem vorstehenden Anspruch, wobei die Aufbauplattform die Waagschale der Waage umfasst oder im Wesentlichen daraus besteht.

6. Gerät nach einem vorstehenden Anspruch, das ferner eine Druckbasis, die bevorzugt Blisterverpackung, Polyetheretherketon (PEEK) oder Backpapier umfasst.

7. Gerät nach einem vorstehenden Anspruch, das ferner Mittel zum Sichern einer Druckbasis umfasst.

8. Verfahren zum Herstellen einer Feststoff-Dosierungsform, umfassend:
i) Bereitstellen eines Geräts nach einem vorstehenden Anspruch;
ii) Betreiben des 3D-Druckers, um die Feststoff-Dosierungsform auf der Aufbauplattform zu drucken;
iii) Betreiben der Waage und/oder Betreiben der Inline-Spektroskopie, um die Dosierung des Wirkstoffs innerhalb der Feststoff-Dosierungsform zu überprüfen;
und optional Durchführen eines oder mehrerer weiterer Bearbeitungsschritte.

9. Verfahren nach Anspruch 8, wobei der 3D-Drucker einen SSE-Druckkopf umfasst, wobei das Verfahren ferner Folgendes umfasst:
iv) Scannen einer Datamatrix oder eines QR-Codes (oder anderer 2D-Codes), die sich auf einer Spritze befinden, die mit einer Druckmischung in dem SSE-Druckkopf geladen ist.

10. Verfahren nach Anspruch 8 oder Anspruch 9, wobei das Verfahren ferner das Aufzeichnen des Druckens der Feststoff-Dosierungsform auf der Aufbauplattform umfasst.

11. Verfahren nach einem der Ansprüche 8 bis 10, das ferner Folgendes umfasst:
Betreiben eines Computers mit geeigneten Datenverbindungen zu dem Druckgerät und dazu konfiguriert, das Gerät zu steuern und/oder zu betreiben, um Feststoff-Dosierungsform-Drucksoftware auszuführen, um:
i) Informationen in Bezug auf einen oder mehrere Parameter, die die zu druckende Feststoff-Dosierungsform betreffen, zu erhalten;
ii) die Masse und/oder das Volumen der zu druckenden Feststoff-Dosierungsform basierend auf den in Schritt (i) erhaltenen Informationen zu berechnen;
iii) das Drucken von und die relativen Anteile der Inhaltsstoffe innerhalb der Feststoff-Dosierungsform basierend auf den in Schritt (i) erhaltenen Informationen und in Schritt (ii) durchgeführten Berechnungen zu steuern:
a. Steuern des Druckens, der Abscheidung und/oder der Extrusion einer wirkstoffhaltigen Druckmischung oder eines Filaments;
b. optional Steuern der Leistung eines oder mehrerer weiterer Bearbeitungsschritte;
wobei die wirkstoffhaltige Druckmischung oder das Filament aus einer wirkstoffhaltigen Zusammensetzung besteht, im Wesentlichen aus einer wirkstoffhaltigen Zusammensetzung besteht oder diese umfasst, die einen Wirkstoff und einen Hilfsstoff umfasst;
wobei der Wirkstoff aus der Gruppe ausgewählt ist, die aus einem Arzneimittel, einem Nutrazeutikum oder einem Nahrungsergänzungsmittel besteht.

12. Verfahren nach Anspruch 11, wobei das Verfahren dazu konfiguriert ist, das Scannen einer Datenmatrix oder eines QR-Codes (oder anderer 2D-Codes) vor dem Drucken mit einem SSE-Druckkopf zu erfordern.

13. Computerprogramm, das Feststoff-Dosierungsform-Drucksoftwarecode zum Durchführen des Verfahrens nach Anspruch 11 oder Anspruch 12 umfasst, wenn das Computerprogramm auf einem Computer nach Anspruch 11 ausgeführt wird.

14. Computerlesbares Medium, das das Computerprogramm nach Anspruch 13 umfasst.

15. Verwendung von mindestens einem
a. des Geräts, wie in einem der Ansprüche 1-7 beansprucht;
b. des Computerprogramms nach Anspruch 13; und/oder
c. des computerlesbaren Mediums nach Anspruch 14;
bei der Herstellung einer Feststoff-Dosierungsform, die einen Wirkstoff und einen Hilfsstoff umfasst;
wobei der Wirkstoff aus der Gruppe ausgewählt ist, die aus einem Arzneimittel, einem Nutrazeutikum oder einem Nahrungsergänzungsmittel besteht.

## Revendications

1. Appareil d'impression de forme posologique solide comprenant :
(i) une imprimante 3D appropriée pour l'impression de formes posologiques solides, ladite imprimante 3D comprenant une tête d'impression (9) interchangeable choisie dans le groupe constitué par : une tête d'impression de modélisation par dépôt de fil fondu (FDM), une tête d'impression par extrusion semi-solide (SSE) et une tête d'impression par extrusion en poudre directe (DPE) ;
(ii) une plate-forme de construction (3)
(iii) une balance (8) pour mesurer la masse des formes posologiques solides imprimées, ladite balance étant intégrée dans ladite plate-forme de construction ;
et éventuellement
(iv) un moyen pour effectuer une spectroscopie dans l'infrarouge proche et/ou Raman directe sur la forme posologique solide ;
dans lequel ladite forme posologique solide comprend au moins un ingrédient actif et au moins un excipient.

2. Appareil selon la revendication 1, comprenant ledit moyen pour effectuer une spectroscopie dans l'infrarouge proche et/ou Raman directe sur la forme posologique solide, comprenant de préférence un moyen pour effectuer à la fois une spectroscopie dans l'infrarouge proche et une spectroscopie Raman.

3. Appareil selon l'une quelconque des revendications précédentes, comprenant en outre une caméra pour enregistrer ladite impression de formes posologiques solides et/ou pour scanner un code de matrice de données ou un code QR (ou d'autres codes 2D) ; et/ou un scanner pour scanner un code de matrice de données ou un code QR (ou d'autres codes 2D).

4. Appareil selon l'une quelconque des revendications précédentes, dans lequel ladite imprimante 3D comprend une tête d'impression SSE et/ou DPE.

5. Appareil selon l'une quelconque des revendications précédentes, dans lequel ladite plate-forme de construction comprend essentiellement le plateau de balance de ladite balance ou consiste essentiellement en celui-ci.

6. Appareil selon l'une quelconque des revendications précédentes, comprenant en outre une base d'impression, comprenant de préférence un emballage-coque, du polyéther éther cétone (PEEK) ou du papier de cuisson.

7. Appareil selon l'une quelconque des revendications précédentes, comprenant en outre un moyen pour fixer une base d'impression.

8. Procédé de fabrication d'une forme posologique solide comprenant :
i) la fourniture d'un appareil selon l'une quelconque des revendications précédentes ;
ii) le fait de faire fonctionner l'imprimante 3D pour imprimer la forme posologique solide sur la plate-forme de construction ;
iii) le fait de faire fonctionner la balance et/ou le fait de faire fonctionner la spectroscopie directe pour vérifier la posologie de l'ingrédient actif dans la forme posologique solide ;
et éventuellement la réalisation d'une ou plusieurs étapes de traitement supplémentaires.

9. Procédé selon la revendication 8, dans lequel ladite imprimante 3D comprend une tête d'impression SSE, ledit procédé comprenant en outre :
iv) le scannage d'un code de matrice de données ou d'un code QR (ou d'autres codes 2D) situé sur une seringue remplie d'un mélange d'impression dans la tête d'impression SSE.

10. Procédé selon la revendication 8 ou la revendication 9, ledit procédé comprenant en outre l'enregistrement de l'impression de ladite forme posologique solide sur la plate-forme de construction.

11. Procédé selon l'une quelconque des revendications 8 à 10, comprenant en outre :
le fait de faire fonctionner un ordinateur, avec des connexions de données adaptées à l'appareil d'impression et configuré pour commander et/ou faire fonctionner l'appareil, pour exécuter un logiciel d'impression de forme posologique solide pour :
i) obtenir des informations concernant un ou plusieurs paramètres relatifs à la forme posologique solide à imprimer ;
ii) calculer la masse et/ou le volume de la forme posologique solide à imprimer sur la base des informations obtenues à l'étape (i) ;
iii) commander l'impression et les proportions relatives des ingrédients dans la forme posologique solide en, sur la base des informations obtenues à l'étape (i) et des calculs effectués à l'étape (ii) :
a. commandant l'impression, par dépôt et/ou extrusion d'un mélange ou filament d'impression contenant un ingrédient actif
b. commandant éventuellement la réalisation d'une ou de plusieurs étapes de traitement supplémentaires ;
dans lequel le mélange ou filament d'impression contenant un ingrédient actif consiste en ou consiste essentiellement en une composition contenant un ingrédient actif comprenant un ingrédient actif et un excipient ou en comprend une ;
dans lequel ledit ingrédient actif est choisi dans le groupe constitué par un produit pharmaceutique, un nutraceutique ou un complément alimentaire.

12. Procédé selon la revendication 11, dans lequel le procédé est configuré pour nécessiter le scannage d'un code matrice de données ou d'un code QR (ou d'autres codes 2D) avant l'impression avec une tête d'impression SSE.

13. Programme informatique comprenant un code logiciel d'impression de forme posologique solide pour mettre en œuvre le procédé selon la revendication 11 ou la revendication 12 lorsque le programme informatique est exécuté sur un ordinateur tel que défini à la revendication 11.

14. Support lisible par ordinateur comprenant le programme informatique selon la revendication 13.

15. Utilisation d'au moins l'un parmi
a. l'appareil selon l'une quelconque des revendications 1 à 7 ;
b. le programme informatique selon la revendication 13 ; et/ou
c. le support lisible par ordinateur selon la revendication 14 ;
dans la préparation d'une forme posologique solide comprenant un ingrédient actif et un excipient ;
dans lequel ledit ingrédient actif est choisi dans le groupe constitué par un produit pharmaceutique, un nutraceutique ou un complément alimentaire.
